(19) Europäisches Patentamt
European Patent Office
Office européen des brevets

(11) **EP 0 725 097 B1**

(12) **EUROPÄISCHE PATENTSCHRIFT**

(45) Veröffentlichungstag und Bekanntmachung des Hinweises auf die Patenterteilung:
**22.09.1999 Patentblatt 1999/38**

(51) Int Cl.⁶: **C08G 18/28**, C08G 18/48

(21) Anmeldenummer: **96100829.9**

(22) Anmeldetag: **22.01.1996**

(54) **Als Verdickungsmittel für wässrige Systeme geeignete Polyurethane**

Polyurethanes suitable as thickeners for aqueous systems

Polyuréthanes comme agents épaississants pour systèmes aqueux

(84) Benannte Vertragsstaaten:
**BE DE DK ES FR GB IT NL SE**

(30) Priorität: **02.02.1995 DE 19503281**

(43) Veröffentlichungstag der Anmeldung:
**07.08.1996 Patentblatt 1996/32**

(73) Patentinhaber: **BAYER AG**
**51368 Leverkusen (DE)**

(72) Erfinder:
• **König, Klaus, Dr.**
**D-51519 Odenthal (DE)**
• **Schwindt, Jürgen, Dr.**
**D-51373 Leverkusen (DE)**
• **Mazanek, Jan, Dr.**
**D-51061 Köln (DE)**
• **Pedain, Josef, Dr.**
**D-51061 Köln (DE)**
• **Dietrich, Manfred, Dr.**
**D-51373 Leverkusen (DE)**
• **Klein, Gerhard, Dr.**
**D-40789 Monheim (DE)**
• **Jerg, Karl-Roland, Dr.**
**D-50937 Köln (DE)**

(56) Entgegenhaltungen:
**EP-A- 0 260 430**       **EP-A- 0 498 442**
**EP-A- 0 618 243**       **WO-A-93/10166**

**Beschreibung**

Die Erfindung betrifft ein vereinfachtes Verfahren zur Herstellung von, als Verdickungsmittel für wäßrige Systeme hochwirksamen, Polyurethanen, die so erhältlichen Polyurethane und ihre Verwendung.

Verdickungsmittel auf Polyurethanbasis für wäßrige Systeme werden in zahlreichen Veröffentlichungen beschrieben (vgl. z.B. DE-OS 1 444 243, DE-OS 3 630 319, EP-A-0 031 777, EP-A-0 307 775, EP-A-0 495 373, US-PS 4 079 028, US-PS 4 155 892, US-PS 4 499 233 oder US-PS 5 023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen.

Wie aus der angeführten Literatur und ihrer Nacharbeit hervorgeht, werden allerdings Verdickungsmittel mit befriedigender oder guter Verdickerwirkung nur erhalten, wenn folgende Bedingungen eingehalten werden:

1) Die hydrophilen gegebenenfalls vorverlängerten Polyethersegmente müssen eine hohe Kettenlänge von mindestens 6.000, besser 10.000 Molekulargewichtseinheiten aufweisen.

2) Sie müssen fast ausschließlich aus Ethylenoxid aufgebaut sein.

3) Die hydrophoben Segmente müssen mindestens 12 Kohlenstoffatome aufweisen und an mindestens zwei Kettenenden angeknüpft sein.

4) Hydrophile und hydrophobe Bestandteile müssen in einem ausgewogenen Gewichtsverhältnis von 92 bis 97 % zu 8 bis 3 % vorliegen.

Darüber hinaus sollten die Verdicker eine möglichst geringe Eigenviskosität (z. B. 10-50 Pas/23°C) aufweisen, damit sie, gegebenenfalls in Form möglichst hochprozentiger Lösungen, problemlos verarbeitet (dosiert) werden können. Diese Bedingung verbietet beispielsweise die Herstellung von langen hydrophilen Segmenten durch kettenverlängernde Umsetzung von vergleichsweise niedermolekularen Polyetherdiolen mit Diisocyanaten, weil die dadurch hervorgerufene Erhöhung der Konzentration an Urethangruppen eine unerwünschte Viskositätserhöhung zur Folge hat.

Der Aufbau von hydrophil/hydrophoben Polyurethanen, die zur Herstellung von Verdickungsmitteln geeignet sind und den genannten Bedingungen genügen, kann nach verschiedenen literaturbekannten Methoden erfolgen:

1) Höhermolekulare (MG 10.000-20.000), mindestens zwei Hydroxyl-Endgruppen aufweisende Polyethylenoxid-Polyether werden mit der äquivalenten Menge eines aliphatischen Monoisocyanats ($C_{12}$-$C_{24}$) umgesetzt.

Obwohl sich diese Synthese relativ einfach darstellt, bietet sie doch einige Nachteile: sie erfordert Polyether mit Molekulargewichten, wie sie bei der üblichen technischen Polyetherherstellung nur mit höherem Aufwand reproduzierbar erreicht werden können. Hierbei wird üblicherweise zunächst aus Ethylenglykol oder einem Oligomeren (Di-, Tri-, Tetraethylenglykol) durch Zugabe von konz. Natronlauge oder Kalilauge und anschließender sorgfältiger Entwässerung ein Alkoholatgemisch zubereitet, und dann bei 90-150 °C Ethylenoxid üblicherweise unter mäßigem Überdruck aufpolymerisiert. Damit bei der Herstellung von Polyethern mit genannten hohen Molekulargewichten die Polymerisation im letzten Abschnitt noch mit ökonomisch vertretbarer Geschwindigkeit verläuft, ist eine "Belegung" der OH-Gruppen mit Alkali von über 20 %, vorzugsweise über 50 %, erforderlich. Dies läuft auf den Einsatz von über 20, vorzugsweise von über 50 Mol-% an Alkalihydroxid pro Mol Hydroxylgruppen hinaus. Eine derart hohe Belegung führt zu Beginn der Reaktion, bei welcher nur niedermolekulare, als Starter eingesetzte Diole vorliegen, zu schwer rührbaren heterogenen Gemischen, die im übrigen nur 1 bis 2 Gew.-% der angestrebten hochmolekularen Polyetheralkohole ausmachen würden. Wegen dieser enormen Volumenunterschiede im Verlauf der Reaktion und den damit in Zusammenhang stehenden Problemen bezüglich der Abführung der Reaktionswärme, erfolgt die Herstellung der hochmolekularen Polyetheralkohole in der Praxis in mehreren Stufen. Das heißt, es wird z. B. in einer ersten Stufe mit geringer Katalysatorbelegung (z. B. 5-10 %) ein Polyethylenoxid vom mittleren MG von 400-800, in einer zweiten Stufe mit höherer Alkalibelegung (10-20 %) ein Polyether vom MG 2.000-4.000 und in einer dritten Stufe bei einer Alkalibelegung von 20-60 % der Polyether mit dem angestrebten hohen Molekulargewicht erzeugt. Die gleiche Verfahrensweise ist erforderlich, wenn höherfunktionelle Starter (Glyzerin, Pentaerythrit, Sorbit) eingesetzt werden. Diese notwendige Verfahrensweise führt zu einem relativ hohen Aufwand in bezug auf Reaktionszeit, mehrfacher Entwässerung und analytischer Betreuung und damit zu hohen Kosten.

Die langen Reaktionszeiten und mehrfachen Unterbrechungen begünstigen Nebenreaktionen (z. B. durch Luftzutritt), die zu unfunktionellen Endgruppen (Vinyl-, Carbonylgruppe) führen können.

Die zur Einführung der hydrophoben Gruppen eingesetzten Monoisocyanate sind teure Spezialprodukte mit begrenztem Markt.

Der Polyether muß absolut wasserfrei sein, weil sonst aus den Monoisocyanaten langkettige Harnstoffe entstehen, die zu Trübungen und Ausfällungen in den zu verdickenden wäßrigen Systemen führen.

2. Es werden monofunktionelle Polyetheralkohole des Molekulargewichtsbereichs 5000 bis 10 000 durch Ethoxylierung von Fettalkoholen oder Alkylphenolen mit 12 bis 24 Kohlenstoffatomen hergestellt und mit Diisocyanaten umgesetzt.

Auch hier gelten die bereits vorstehend genannten Probleme bezüglich der Polyetherherstellung. Das als Starter eingesetzte Alkoholatgemisch entspricht ca. 3 bis 6 Gew.-% der Menge des letztendlich angestrebten Polyetheralkohols, die für die Endphase der Reaktion notwendige Katalysatorbelegung kann nicht von Beginn an erfolgen. Bei der Alkoholatherstellung aus dem Alkohol/Alkalilauge-Gemisch durch Entwässerung kommt es zu störender Wasserdampfdestillation der Starter und Auskristallisation (im Falle fester Verbindungen) in der Kolonne und im Kühler der Destillationseinrichtung.

3. Aus den gemäß der unter 1) genannten Methode hergestellten Polyetheralkoholen und Diisocyanaten wird zunächst ein NCO-Prepolymer hergestellt, welches anschließend mit Fettalkoholen oder Alkylphenolen mit 12 bis 24 Kohlenstoffatomen umgesetzt wird.

Auf diese Weise wird der Einsatz teurer Monoisocyanate vermieden. Es gilt jedoch die geschilderte Problematik der Polyetherherstellung. Außerdem kann die Synthese nur zu einem geregelten Aufbau führen, wenn Diisocyanate mit selektiv unterschiedlich reagierenden NCO-Gruppen eingesetzt werden (z. B. 2,4-Toluylendiisocyanat), da sonst in der ersten Stufe ein erheblicher Anteil des Diisocyanats unumgesetzt bleibt und in der zweiten Stufe mit den Monoalkoholen wasserunlösliche Diurethane bildet. Ganz zu vermeiden ist diese Erscheinung allerdings auch nicht mit den genannten Diisocyanaten unterschiedlicher Reaktivität.

Verdickungsmittel auf Polyurethanbasis der genannten Art eignen sich als Hilfsmittel für die Einstellung von rheologischen Eigenschaften von wäßrigen Systemen wie Auto- und Industrielacken, Putz- und Anstrichfarben, Druck- und Textilfarben, Pigmentdruckpasten, pharmazeutischen, kosmetischen Zubereitungen, Pflanzenschutzformulierungen, Füllstoffdispersionen u.dgl.

Obwohl die bekannten Polyurethanverdicker eine breite Anwendung finden, weisen sie für viele Anwendungsbereiche eine zu niedrige Verdickerwirkung auf bzw. sind aus den genannten Gründen nur auf umständliche und unwirtschaftliche Weise zugänglich.

Die der Erfindung zugrundeliegende Aufgabe bestand daher darin, ein gegenüber den aufgezeigten Methoden des Standes der Technik wesentlich vereinfachtes Verfahren zur Herstellung von, als Verdicker für wäßrige Systeme hochwirksamen, Polyurethanen zur Verfügung zu stellen, die bezüglich ihrer verdickenden Wirkung, insbesondere auch im Bereich niedriger Scherbelastung den besten Produkten des Standes der Technik zumindest ebenbürtig sind. Eine gute verdickende Wirkung im Bereich niedriger Scherkräfte ist insbesondere erforderlich, um beispielsweise den Verlauf von wäßrigen Dispersionsfarben positiv zu beeinflussen.

Diese Aufgabe konnte mit der Bereitstellung des nachstehend näher beschriebenen erfindungsgemäßen Verfahrens gelöst werden.

Gegenstand der Erfindung ist ein Verfahren zur Herstellung von, als Verdickungsmittel für wäßrige Systeme geeigneten Polyurethanen durch Umsetzung einer Polyetherkomponente a), bestehend aus einem Gemisch aus hydrophilen, alkoholische Hydroxylgruppen aufweisenden Polyetheralkoholen, mit einer Polyisocyanatkomponente b), bestehend aus mindestens einem organischen Diisocyanat, gegebenenfalls in Abmischung mit bis zu 20 Mol-%, bezogen auf die Gesamtmenge der Komponente b), an höher als difunktionellen Polyisocyanaten, unter Einhaltung eines NCO/OH-Äquivalentverhältnisses von 0,9:1 bis 1,2:1, gegebenenfalls unter Mitverwendung von in der Polyurethanchemie üblichen Hilfs- und Zusatzmitteln,

dadurch gekennzeichnet, daß die Polyetherkomponente a) eine OH-Zahl von 10 bis 30 mg KOH/g aufweist und durch Alkoxylierung eines Gemischs aus

a1) 30 bis 80 Mol-% eines monofunktionellen Alkohols oder Alkylphenols mit 8 bis 30 Kohlenstoffatomen,

a2) 2 bis 10 Mol-% Natrium- oder Kaliumhydroxid,

a3) 10 bis 60 Mol-% Wasser und

a4) 0 bis 10 Mol-% eines 3- bis 6-wertigen Alkohols des Molekulargewichtsbereichs 92 bis 600

unter Verwendung von Ethylenoxid oder eines Gemischs aus Ethylenoxid mit bis zu 20 Mol-% Propylenoxid, bezogen auf die Gesamtmenge der Alkylenoxide, unter anschließender an sich bekannter Aufarbeitung des Alkoxylierungsprodukts erhalten worden ist, wobei sich die unter a1) bis a4) genannten Prozentangaben zu 100 ergänzen.

Gegenstand der Erfindung sind auch die nach diesem Verfahren erhältlichen Polyurethane und ihre Verwendung, gegebenenfalls in Kombination mit anderen Verdickungsmitteln, zur Verdickung wäßriger Systeme.

Das erfindungsgemäße Verfahren weist gegenüber den Verfahren des Standes der Technik eine Reihe gravierender Vorteile auf:

- Bei der Polyetherherstellung kann von Anfang an auch die für die Endphase erforderliche Menge des Alkalikatalysators eingesetzt werden.

- Eine Alkoholatbildung durch Entwässerung zu Beginn der Reaktion kann entfallen, da das zugesetzte und das aus dem Alkalihydroxid entstehende Wasser selbst als Starter fungiert.

- Trotz relativ hoher Alkalibelegung erfolgt keine Verfestigung des Startergemischs zu Beginn der Reaktion.

- Die Menge des Startergemischs beträgt ca. 3 Gew.-%, bezogen auf das Gewicht des Endprodukts, eine Menge, die für eine einstufige Eintropf-Reaktion ausreichend ist.

- Das erfindungsgemäße Verfahren liefert ein Polyethergemisch, welches durch Umsetzung mit organischen Diisocyanaten unter Molekulargewichtserhöhung zu einem hochwirksamen Polyurethanverdicker umgesetzt werden kann. Die getrennte Herstellung von mono- und höherfunktionellen Polyetheralkoholen ist daher nicht erforderlich.

Das Startergemisch zur Herstellung der Polyolkomponente a) besteht zu 30 bis 80, vorzugsweise 40 bis 75 und besonders bevorzugt zu 50 bis 70 Mol-% aus der Komponente a1), zu 2 bis 10, vorzugsweise 5 bis 9 und besonders bevorzugt 6 bis 9 Mol-% aus der Komponente a2), zu 10 bis 60, vorzugsweise 15 bis 50 und besonders bevorzugt 20 bis 45 Mol-% aus der Komponente a3) und zu 0 bis 10, vorzugsweise 0 bis 8 und besonders bevorzugt 0 bis 5 Mol-% aus der Komponente a4).

Bei der Komponente a1) handelt es sich um monofunktionelle Alkohole oder Alkylphenole mit 8 bis 30, vorzugsweise 10 bis 24 und besonders bevorzugt 12 bis 22 Kohlenstoffatomen. Beispiele hierfür sind die isomeren Octanole, Nonanole, Decanole, Dodecanole, Tetradecanole, Hexadecanole, Octadecanole, Behenylalkohol oder deren Gemische, sowie technische Fettalkoholgemische einer entsprechenden durchschnittlichen Kettenlänge, wie sie unter verschiedenen Handelsnamen im Markt angeboten werden - ferner Alkylphenole wie die isomeren Octyl-, Nonyl-, Decyl- oder Dodecylphenole. Besonders bevorzugt sind diesen Ausführungen entsprechende einwertige aliphatische Alkohole mit 12 bis 18 Kohlenstoffatomen oder deren Gemische. Ganz besonders bevorzugt ist Stearylalkohol.

Bei der Komponente a2) handelt es sich um Natrium- und/oder Kaliumhydroxid.

Bei der Komponente a3) handelt es sich um Wasser. Die Komponenten a2) und a3) werden vorzugsweise kombiniert, d.h. in Form handelsüblicher konzentrierter Alkalilaugen verwendet.

Bei der Komponente a4), die gegebenenfalls mitverwendet wird, handelt es sich um 3- bis 6-wertige Alkohole des Molekulargewichtsbereichs 92 bis 600, vorzugsweise 92 bis 400 und besonders bevorzugt 92 bis 200 wie beispielsweise Glycerin, Trimethylolpropan, Pentaerythrit und/oder Sorbit. Vorzugsweise wird, falls überhaupt, Glycerin oder Trimethylolpropan verwendet.

Bei der erfindungswesentlichen Alkoxylierungsreaktion wird als Alkylenoxid Ethylenoxid oder ein Gemisch aus Ethylenoxid mit bis zu 20 Mol-%, bezogen auf Gemisch, an Propylenoxid eingesetzt. Vorzugsweise besteht das zum Einsatz gelangende Alkylenoxid ausschließlich aus Ethylenoxid.

Zur Durchführung der erfindungswesentlichen Alkoxylierungsreaktion wird zunächst aus den Ausgangskomponenten a1) bis a3) und gegebenenfalls a4) ein "Startergemisch" hergestellt, welches dann in an sich bekannter Weise alkoxyliert wird. Hierzu kann das Alkylenoxid beispielsweise kontinuierlich unter ständigem Durchmischen (Rühren) zudosiert werden. Im allgemeinen erfolgt die Alkoxylierungsreaktion gegebenenfalls unter Überdruck bei 80 bis 150°C, vorzugsweise 100 bis 120°C, wobei die Mengenverhältnisse der Reaktionspartner der angestrebten OH-Zahl des Alkoxylierungsprodukts von 10 bis 30, vorzugsweise 12 bis 26 und besonders bevorzugt 15 bis 22 mg KOH/g angepaßt werden. Nach Beendigung der Reaktion wird in an sich bekannter Weise aufgearbeitet, d.h. der eingesetzte Katalysator wird, beispielsweise unter Verwendung von 20 %iger Schwefelsäure, neutralisiert. Das dann vorliegende Alkoxylierungsprodukt wird, gegebenenfalls nach Entfernung des durch die Neutralisation entstandenen Salzes durch Filtration, vor seiner Weiterverwendung vorzugsweise im Vakuum (z.B. 1 bis 10 mbar/100 bis 150°C) entwässert. Bei der geschilderten Vorgehensweise ist eine exakte Neutralisation des eingesetzten basischen Katalysators (pH-Wert nach der Neutralisation = 6 bis 7), nicht jedoch unbedingt eine Entfernung der bei der Neutralisation entstandenen Salze durch Filtration erforderlich, da diese in den letztendlich erhaltenen erfindungsgemäßen Verfahrensprodukten bzw. bei deren Verwendung wegen ihrer geringen Konzentration keinen schädlichen Einfluß ausüben.

Als Komponente b) können beim erfindungsgemäßen Verfahren beliebige Diisocyanate des Molekulargewichtsbereichs 168 bis 300 eingesetzt werden. Bevorzugt werden handelsübliche Diisocyanate wie beispielsweise Hexamethylendiisocyanat (HDI), 1-Isocyanato-3,3,5-trimethyl-5-isocyanatomethyl-cyclohexan (IPDI), 4,4'-Diisocyanato-dicyclohexylmethan (HMDI), 2,4-Diisocyanatotoluol oder seine technischen Gemische mit bis zu 35 Gew.-%, bezogen auf Gemisch, an 2,6-Diisocyanatotoluol, 4,4'-Diisocyanatodiphenylmethan oder seine technischen Gemische mit 2,4'- und gegebenenfalls auch 2,2'-Diisocyanatodiphenylmethan oder beliebige Gemische derartiger Diisocyanate. Die Isocyanatkomponente b) kann neben derartigen Diisocyanaten auch bis zu 20 Mol-%, bezogen auf die Gesamtmenge der Komponente b), an höher als difunktionellen Isocyanaten enthalten. Hierzu gehören beispielsweise höherfunktionelle Polyisocyanate der Diphenylmethanreihe, wie sie bei der Phosgenierung von Anilin/Formaldehyd-Kondensaten neben den bereits beispielhaft genannten Diisocyanaten der Diphenylmethanreihe entstehen. Zu den höherfunktionellen Polyisocyanaten gehören jedoch insbesondere auch die an sich bekannten, Urethan-, Allophanat-, Biuret- und/oder Isocyanuratgruppen aufweisenden Lackpolyisocyanate, insbesondere auf Basis von HDI. Die Isocyanatkomponente b) besteht vorzugsweise aus aliphatischen Polyisocyanaten der beispielhaft genannten Art. Besonders bevorzugt wird reines HDI als Isocyanatkomponente b) verwendet.

Die erfindungsgemäße Umsetzung zwischen den Komponenten a) und b) erfolgt in an sich bekannter Weise, gegebenenfalls unter Mitverwendung von an sich bekannten Katalysatoren wie beispielsweise Zinndioctoat oder Dibutylzinndilaurat. Die Umsetzung erfolgt vorzugsweise lösungsmittelfrei bei 60 bis 150°C, vorzugsweise 80 bis 120°C unter Verwendung von, bezüglich der Isocyanat-Additionsreaktion etwa äquivalenten Mengen der Ausgangskomponenten (NCO/OH-Äquivalentverhältnis = 0,9:1 bis 1,2:1, vorzugsweise 0,95:1 bis 1,1:1). Die Verwendung eines geringen Isocyanat-Überschusses kann gegebenenfalls den schädlichen Einfluß von evtl. noch vorhandenen Wasserspuren kompensieren. Zur Durchführung der Reaktion kann beispielsweise so vorgegangen werden, daß man die Komponente a) bei 60 bis 80°C vorlegt und dann die Komponente b) auf einmal einrührt. Gleichzeitig oder im Anschluß an die Zugabe der Komponente b) können gegebenenfalls 0,05 bis 0,3 Gew.-%, bezogen auf das gesamte Reaktionsgemisch, des Katalysators zugegeben werden, worauf sich die Beendigung der Reaktion bei 100 bis 120°C innerhalb eines Zeitraums von 3 bis 6 Stunden anschließt. Das Ende der Reaktion kann durch IR-Spektroskopie kontrolliert werden.

Bei den auf diese Weise hergestellten erfindungsgemäßen Verfahrensprodukten handelt es sich im allgemeinen um farblose bis gelbliche Wachse mit Erweichungspunkten bzw. -bereichen innerhalb des Temperaturbereichs von 40 bis 80°C. Für den späteren Einsatz ist es oftmals vorteilhaft, die erfindungsgemäßen Polyurethane mit Zusätzen wie z. B. Formulierungsmitteln, Lösungsmitteln, Wasser, Emulgatoren oder Stabilisatoren zu flüssigen Formulierungen zu vermischen.

Die erfindungsgemäßen Polyurethane eignen sich zur Verdickung von wäßrigen bzw. überwiegend wäßrigen Systemen wie Farben, Druck- und Pigmentpasten, Füllstoff- und Pigmentdispersionen, Textil-, Leder- und Papierhilfsmittel, Zubereitungen für die Erdölförderung, Zubereitungen von Waschmitteln, Klebstoffen, Wachsen für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickern angedickt werden, um dann gegebenenfalls mit weiteren Zusätzen versetzt zu werden oder selbst zu wäßrigen Zubereitungen zugesetzt zu werden. Die erfindungsgemäßen Verdicker können auch in Gemischen mit anderen Verdickungsmitteln eingesetzt werden wie z. B. solchen auf Basis von Polyacrylaten, Cellulosederivaten oder anorganischen Verdickungsmitteln.

Beispiele für wäßrige Systeme, die erfindungsgemäß verdickt werden können, sind wäßrige Polyacrylatdispersionen, wäßrige Dispersionen von Mischpolymerisaten olefinisch ungesättigter Monomerer, wäßrige Polyvinylacetatdispersionen, wäßrige Polyurethandispersionen, wäßrige Polyesterdispersionen und insbesondere gebrauchsfertige Zubereitungen der oben bereits angesprochenen Art auf Basis derartiger Dispersionen.

Die erfindungsgemäßen Verdickungsmittel können selbstverständlich in Substanz, vorzugsweise als Granulat oder gegebenenfalls Pulver, eingesetzt werden. Bevorzugte Verwendung finden jedoch flüssige Formulierungen, die neben den erfindungsgemäßen Polyurethanen Wasser, Lösungsmittel wie Butyldiglykol, Isopropanol, Methoxypropylacetat, Ethylen- und/oder Propylenglykol, nichtionische Emulgatoren, Tenside und/oder gegebenenfalls weitere Zusatzstoffe enthalten, da dadurch die Einarbeitung der erfindungsgemäßen Verdickungsmittel in wäßrige bzw. überwiegend wäßrige Systeme wesentlich erleichtert wird.

Die gebrauchsfertigen Zubereitungen der erfindungsgemäßen Verdickungsmittel stellen besonders bevorzugt wäßrige Lösungen oder Dispersionen mit einem Feststoffgehalt von 10 bis 80, vorzugsweise 30 bis 60 und besonders bevorzugt 40 bis 50 Gew.-% dar.

Die Menge an erfindungsgemäßen Verdickungsmitteln, die den wäßrigen bzw. überwiegend wäßrigen Systemen zum Erreichen der gewünschten Verdickung zugesetzt werden, hängt vom jeweiligen Verwendungszweck ab und kann vom Fachmann in wenigen Versuchen ermittelt werden. In der Regel werden 0,05 bis 10 Gew.-%, bevorzugt 0,1 bis 4 Gew.-%, besonders bevorzugt 0,1 bis 1 Gew.-% des erfindungsgemäßen Verdickungsmittels eingesetzt, wobei sich diese Prozentangaben auf den Feststoff des Verdickungsmittels einerseits und den Feststoffgehalt des zu verdickenden wäßrigen Systems andererseits beziehen.

Die nachstehenden Beispiele dienen der weiteren Erläuterung der Erfindung. Die Beurteilung der Wirksamkeit (Viskosität) der erfindungsgemäßen Verdickungsmittel und die Viskositätsbestimmungen der wasserfreien Polyurethane erfolgten unter Verwendung eines handelsüblichen Haake-Rotationsviskosimeter. Alle Molekulargewichtsangaben beziehen sich auf das aus OH-Gehalt und OH-Funktionalität errechenbare mittlere Molekulargewicht der betreffenden Alkohole. Alle Prozentangaben, soweit nichts anderslautendes angemerkt, beziehen sich auf das Gewicht.

**Beispiele**

**Herstellung eines erfindungsgemäßen Polyethers a) (nachstehend Polyether A) genannt)**

In einem 100 l-Kessel mit Mantelheizung, bodengängigem Ankerrührer und Rückflußkühler (Solekühlung -30 °C) wurden 2.705 g (10 Mol) Stearylalkohol aufgeschmolzen und unter Stickstoffüberlagerung mit 136,3 g 50 %iger KOH versetzt (1,215 Mol KOH, 3,785 Mol $H_2O$) und unter 2 bar Überdruck auf 110-115°C aufgeheizt. Bei dieser Temperatur wurden im Verlauf von 10 Stunden exakt 58,730 g Ethylenoxid zudosiert (empirischer Überschuß von 2,8 %). Nach weiteren 2 Stunden Nachreaktion wurde auf 80 °C abgekühlt und mit 20 %iger $H_2SO_4$ exakt auf pH 6,5 eingestellt. Nach Abdestillieren des Wassers bei 120 °C/10 mbar innerhalb 2 Stunden wurde über ein Seitzfilter (Porengröße 20 μ) abgedrückt. Es wurde ein nahezu farbloses Wachs vom Fp 60° mit einer OH-Zahl von 18,5 erhalten. Die Viskosität betrug 330 mPa·s bei 75°. Der Polyether stellt ein Gemisch aus monofunktionellem (MG ≈ 3000) und bifunktionellem Polyethylenglykol (MG ≈ 6000) im Molverhältnis 2:1 dar.

**Beispiel 1** (erfindungsgemäßes Verfahren)

6.064 g (2 Mol OH-Gruppen) Polyether A wurden unter Stickstoff aufgeschmolzen und bei 1 mbar/120 °C innerhalb 2 Stunden von Spuren Wasser befreit. Nach Abkühlen auf 80°C wurden 168 g (1 Mol) Hexamethylendiisocyanat zugegeben und 2 Stunden bei dieser Temperatur gerührt. Nach Zugabe von 5 g Zinndioctoat wurde noch 2 Stunden bei 120°C nachgerührt. Danach war IR-spektroskopisch kein NCO mehr nachzuweisen. Das Produkt wurde auf Bleche ausgegossen. Es wurde ein schwach gelbliches Wachs mit einem Erweichungspunkt von 65°C und einer Viskosität von 250 mPa.s bei 75°C erhalten. Die Viskositäten der reinen Polyurethane sind (im Unterschied zu den Viskositäten ihrer wäßrigen Lösungen) von der während der Viskositätsbestimmung zur Anwendung kommenden Scherkraft weitgehend unabhängig und wurden bei 75°C bestimmt. Dies gilt auch für die nachstehend gemachten Viskositätsangaben der wasserfreien erfindungsgemäßen Verfahrensprodukte.

**Beispiel 1a**

Die Durchführung folgt Beispiel 1. Auf eine Entwässerung wurde verzichtet, und der aus der Polyurethanherstellung verbliebene Restwassergehalt (0,01 %) wurde durch Einsatz von 10 % molarem Überschuß Hexamethylendiisocyanat kompensiert. Das Endprodukt wies eine leicht erhöhte Viskosität von 280 mPa.s bei 75°C auf.

Analog Polyether A wurden die in der folgenden Tabelle aufgelisteten Polyethylenglykolpolyether hergestellt.

| Polyether | Mol Alkohol | Mol Alkalihydroxid | Mol Wasser | Epoxid | OH-Zahl | Aggregatzustand/ Viskosität*) |
|---|---|---|---|---|---|---|
| B | 10 Stearyl- | 1,551 NaOH | 3,449 | 80 % Ethylenoxid 20 % Propylenoxid | 24,0 | flüssig/260 |
| C | 10 Dodecyl- | 1,215 KOH | 3,785 | Ethylenoxid | 17,0 | Wachs/350 |
| D | 10 Nonylphenol | 1,215 KOH | 3,785 | Ethylenoxid | 20,2 | Wachs/320 |
| E | 10 technisches Fettalkohol-Gemisch $C_{14}$-$C_{22}$ | 0,9306 NaOH | 2,096 | Ethylenoxid | 19,3 | Wachs/250 |

*) Aggregatzustand bei 25°C, Viskosität in mPa.s bei 75°C

(fortgesetzt)

| Polyether | Mol Alkohol | Mol Alkalihydroxid | Mol Wasser | Epoxid | OH-Zahl | Aggregatzustand/ Viskosität*) |
|---|---|---|---|---|---|---|
| F | 10 Hexadecanol | 2,43 KOH | 7,57 $H_2O$ | Ethylenoxid | 26,7 | Wachs/220 |
| G | 9,5 Stearyl-0,5 Glyzerin | 1,215 KOH | 3,785 | Ethylenoxid | 17,9 | Wachs/380 |

*) Aggregatzustand bei 25°C, Viskosität in mPa.s bei 75°C

Analog Beispiel 1 wurden in der folgenden Tabelle aufgelisteten Polyurethanverdicker hergestellt und nach beendeter Reaktion zu 25 %igen Lösungen in Propylenglykol/Wasser (Gewichtsverhältnis = 6:4) aufgelöst.

| Beispiel | Polyether | Diisocyanat | NCO/OH-Äquivalentverhältnis | Katalysator |
|---|---|---|---|---|
| 2 | A | 80 % 2,4-, 20 % 2,6-Toluylendiisocanat | 1,0 | - |
| 3 | A | IPDI | 1,05 | Diazobicyclooctan |
| 4 | A | HMDI | 0,95 | Dibutylzinndilaurat |
| 5 | B | HMDI | 1,1 | -"- |
| 6 | C | HDI | 1,1 | Zinndioctat |
| 7 | D | HDI | 1,05 | -"- |
| 8 | E | HDI | 1,05 | -"- |
| 9 | F | HDI | 1,05 | -"- |
| 10 | G | HDI | 1,05 | -"- |
| 11 | A | HDI/HDI-Biuret-Gemisch, Gewichtsverhältnis 9:1 | 1,0 | Zinndioctoat |
| Vergleichsbeispiel | $a_1 + a_2$ | 2,4-Toluylendiisocyanat | 1,0 | - |

## Vergleichsbeispiel

Es handelt sich um ein Vergleichsbeispiel zu Beispiel 2 (vergleichbares Diisocyanat, gleiches Molverhältnis der ein- und zweiwertigen Polyetheralkohole).

## Polyether $a_1$ (monofunktionell)

In der Apparatur analog Beispiel 1 wurden 5.410 g (20 Mol) Stearylalkohol aufgeschmolzen und unter Stickstoffüberlagerung mit 136,3 g 50%iger KOH versetzt. Nun wurde bei 10 mbar und 105°C im Verlauf von 8 Stunden durch Abdestillieren von Wasser der Alkohol in das Alkoholat überführt. Dabei kam es zu deutlichen Ablagerungen des Stearylalkohols im Kühler. Nun wurden im Verlauf von 6 Stunden bei 100°C und 2 Pa.s 55,000 g Ethylenoxid zudosiert. Danach betrug die OH-Zahl 18.4.
Die Aufarbeitung erfolgte wie bei Beispiel 1. Es wurde ein nahezu farbloses Wachs mit einer OH-Zahl von 17,6 erhalten.

## Polyether $a_2$ (difunktionell)

In der gleichen Apparatur wurden 6.360 g (60 Mol) Diethylenglykol mit 818 g (7,29 Mol) 50 %iger KOH versetzt und wie oben durch Entwässerung in ein Alkoholat überführt. Nun wurden wie oben 59,5 kg Ethylenoxid zudosiert und noch 4 Stunden nachreagiert. Danach betrug die OH-Zahl 114.
Nun wurden 50,5 kg des Polyethers (ca. 5/6) abgelassen und unter strengem Luftausschluß gelagert. Zum verbleibenden Rest (ca. 1/6) wurden wie unter Beispiel 1 50 kg Ethylenoxid aufpolymerisiert. Nach analoger Aufarbeitung erhielt man ein gelbliches Wachs der OH-Zahl 17,8.

**Herstellung eines Verdickers aus den beiden Polyethern a$_1$ und a$_2$**

6.303 g (1 Mol) des Polyethers a$_2$ wurden bei 1 mPa.s und 120°C innerhalb von 2 Stunden sorgfältig entwässert und nach Abkühlung auf 60°C mit 348 g (2 Mol) 2,4-Toluylendiisocyanat versetzt. Nach 6-stündigem Rühren bei dieser Temperatur betrug der NCO-Gehalt 1,25 % (berechnet 1,26 %). Nun wurden 6.374 g (2 Mol) des separat entwässerten monofunktionellen Polyethers a$_1$ mit einer Temperatur von 80°C flüssig eingerührt, und das Gemisch nach 3 Stunden bei 80°C und 3 Stunden bei 120°C nachgerührt. Danach war IR-spektroskopisch kein NCO mehr nachweisbar.

Das Produkt wurde auf ein Blech abgelassen. Gelbes Wachs (Erweichungspunkt: 67°C) Visk.: 3.000 mPa.s bei 75°C.

**Anwendungsbeispiele:**

Die nachfolgenden Beispiele 12 bis 22 zeigen, daß mit den erfindungsgemäßen Verdickungsmitteln Dispersionsfarben erhalten werden können, die verbesserte Verarbeitungseigenschaften (z. B. Sedimentationsstabilität des Anstrichmittels, dessen Auftragbarkeit, Verlauf und Eignung zur Bildung hoher Schichtdicken) zeigen. Die Viskositäten der mit den erfindungsgemäßen Verdickungsmitteln hergestellten Farben sowie die Fließgrenzen wurden mit einem Haake-Viskosimeter bei 1, 10 bzw. bei $10^4$ s$^{-1}$ gemessen.

**Beispiele 12 bis 22**

Mit jeweils 5 g Polyurethanverdicker wurde eine Glanzdispersion auf Acrylatbasis folgender Zusammensetzung hergestellt:

| | |
|---|---|
| AMP 90[1] | 2,5 g |
| ® Borchigen ND[2], 25 %ig in Wasser | 13,6 g |
| ® Borchigen DFN[2], 100 %ig in Wasser | 5,0 g |
| ® Neocryl AP 2860[3] | 3,2 g |
| TiO$_2$-RHD-2 | 225,0 g |
| Methoxybutanol | 17,0 g |
| Propylenglykol | 17,0 g |
| Butyldiglykol | 17,0 g |
| Wasser | 44,7 g |
| ® Neocryl XK 62[4] | 540,0 g |
| Wasser | 110,0 g |
| | 995,0 g |

1) (2-Amino-2-methylpropanol-1, 90 %ig in Wasser), Angus Chemie GmbH, Essen

2) Netzmittel, Gebr. Borchers AG, Goslar

3) Entschäumer, ICI Resins, Runcorn, England

4) anionische Dispersion auf Basis Acrylat/Styrol, ICI Resins

Die Ergebnisse der anwendungstechnischen Prüfungen sind in Tabelle 3 aufgeführt.

Tabelle 3

| Bsp. Nr. | Verdicker aus Herstellbeispiel | Viskosität bei [s$^{-1}$] [Pa.] | | |
|---|---|---|---|---|
| | | 1 | 10 | $10^4$ |
| 12 | 1 | 23,2 | 17,6 | 0,16 |
| 12a | Vergleich | 25,1 | 18,2 | 0,18 |
| 13 | 2 | 35,8 | 26,4 | 0,18 |
| 14 | 3 | 24,0 | 18,2 | 0,16 |
| 15 | 4 | 25,2 | 19,8 | 0,17 |

EP 0 725 097 B1

Tabelle 3   (fortgesetzt)

| Bsp. Nr. | Verdicker aus Herstellbeispiel | Viskosität bei [s⁻¹] [Pa.] | | |
|---|---|---|---|---|
| | | 1 | 10 | $10^4$ |
| 16 | 5 | 22,7 | 17,8 | 0,15 |
| 17 | 6 | 3,6 | 1,4 | 0,10 |
| 18 | 7 | 16,2 | 12,3 | 0,11 |
| 19 | 8 | 13,9 | 10,6 | 0,10 |
| 20 | 9 | 18,6 | 14,1 | 0,13 |
| 21 | 10 | 29,8 | 19,9 | 0,17 |
| 22 | 11 | 22,6 | 16,4 | 0,12 |

Diese Ergebnisse zeigen die gute Eignung der erfindungsgemäßen Polyurethane als Verdickungsmittel für ein wäßriges Beschichtungsmittel. Die vergleichsweise niedrige Verdickungswirkung des Polyurethans gemäß Beispiel 6 (Anwendungsbeispiel 17) ist auf die Verwendung eines vergleichsweise kurzkettigen einwertigen Alkohols a1) (Dodecylalkohol) zurückzuführen. Dieser scheinbare Nachteil wird jedoch durch den Vorteil eines besonders günstigen Verlaufs des entsprechenden Beschichtungsmittels kompensiert.

## Patentansprüche

1. Verfahren zur Herstellung von, als Verdickungsmittel für wäßrige Systeme geeigneten Polyurethanen durch Umsetzung einer Polyetherkomponente a), bestehend aus einem Gemisch aus hydrophilen, alkoholische Hydroxylgruppen aufweisenden Polyetheralkoholen, mit einer Polyisocyanatkomponente b), bestehend aus mindestens einem organischen Diisocyanat, gegebenenfalls in Abmischung mit bis zu 20 Mol-%, bezogen auf die Gesamtmenge der Komponente b), an höher als difunktionellen Polyisocyanaten, unter Einhaltung eines NCO/OH-Äquivalentverhältnisses von 0,9:1 bis 1,2:1, gegebenenfalls unter Mitverwendung von in der Polyurethanchemie üblichen Hilfs- und Zusatzmitteln,
dadurch gekennzeichnet, daß die Polyetherkomponente a) eine OH-Zahl von 10 bis 30 mg KOH/g aufweist und durch Alkoxylierung eines Gemischs aus

   a1) 30 bis 80 Mol-% eines monofunktionellen Alkohols oder Alkylphenols mit 8 bis 30 Kohlenstoffatomen,

   a2) 2 bis 10 Mol-% Natrium- oder Kaliumhydroxid,

   a3) 10 bis 60 Mol-% Wasser und

   a4) 0 bis 10 Mol-% eines 3- bis 6-wertigen Alkohols des Molekulargewichtsbereichs 92 bis 600

   unter Verwendung von Ethylenoxid oder eines Gemischs aus Ethylenoxid mit bis zu 20 Mol-% Propylenoxid, bezogen auf die Gesamtmenge der Alkylenoxide, unter anschließender an sich bekannter Aufarbeitung des Alkoxylierungsprodukts erhalten worden ist, wobei sich die unter a1) bis a4) genannten Prozentangaben zu 100 ergänzen.

2. Verfahren gemäß Anspruch 1, dadurch gekennzeichnet, daß die Komponente a1) aus einwertigen aliphatischen Alkoholen mit 12 bis 18 Kohlenstoffatomen oder aus technischen Gemischen derartiger Alkohole besteht.

3. Verfahren gemäß Anspruch 1 und 2, dadurch gekennzeichnet, daß die Komponente b) aus Hexamethylendiisocyanat, 4,4'-Diisocyanato-dicyclohexylmethan, 1-Isocyanato-3,3,5-isocyanatomethyl-cyclohexan oder einem Gemisch aus derartigen Diisocyanaten besteht.

4. Gemäß Anspruch 1 bis 3 erhältliche Polyurethane.

5. Verwendung der gemäß Anspruch 1 bis 3 erhältlichen Polyurethane als Verdickungsmittel für wäßrige Systeme.

9

## Claims

1. Method for the preparation of polyurethanes suitable as thickeners for aqueous systems by the reaction of a polyether component a), consisting of a mixture of polyether alcohols possessing hydrophilic, alcoholic hydroxyl groups, with a polyisocyanate component b), consisting of at least one organic diisocyanate, optionally in a mixture together with up to 20 mol-%, referred to the total quantity of component b), of higher than difunctional polyisocyanates, while maintaining an NCO/OH equivalent ratio of from 0.9:1 to 1.2:1, optionally with the concomitant use of auxiliary substances and additives conventional in polyurethane chemistry,
characterised in that the polyether component a) has an OH number of from 10 to 30 mg KOH/g and has been obtained by alkoxylation of a mixture of

   a1) from 30 to 80 mol-% of a monofunctional alcohol or alkylphenol having 8 to 30 carbon atoms,

   a2) from 2 to 10 mol-% of sodium hydroxide or potassium hydroxide,

   a3) from 10 to 60 mol-% of water and

   a4) from 0 to 10 mol-% of a trihydric to hexahydric alcohol in the molecular weight range of from 92 to 600

   using ethylene oxide or a mixture of ethylene oxide together with up to 20 mol-% of propylene oxide, referred to the total quantity of alkylene oxides, and subsequent known per se working up of the alkoxylation product, with the percentages given above under a1) to a4) amounting to 100.

2. Method according to claim 1, characterised in that component a1) consists of monohydric aliphatic alcohols having 12 to 18 carbon atoms, or of technical mixtures of such alcohols.

3. Method according to claims 1 and 2, characterised in that component b) consists of hexamethylene diisocyanate, 4,4'-diisocyanatodicyclohexylmethane, 1-isocyanato-3,3,5-isocyanatomethylcyclohexane or of a mixture of such diisocyanates.

4. Polyurethanes obtainable according to claims 1 to 3.

5. Use of the polyurethanes obtainable according to claims 1 to 3 as thickeners for aqueous systems.

## Revendications

1. Procédé pour la préparation de polyuréthannes appropriés comme épaississants pour des systèmes aqueux, par mise en réaction d'un composant de polyéther a) constitué d'un mélange de polyéther-alcools hydrophiles présentant des groupes hydroxyle alcooliques avec un composant de polyisocyanate b) constitué d'au moins un diisocyanate organique le cas échéant en mélange avec des polyisocyanates plus que difonctionnels jusqu'à concurrence de 20 moles % rapportés à la quantité totale du composant b), tout en maintenant un rapport d'équivalents des groupes NCO/OH de 0,9:1 à 1,2:1, le cas échéant en utilisant de manière conjointe des adjuvants et des additifs habituels dans la chimie des polyuréthannes,
caractérisé en ce que le composant de polyéther a) présente un indice OH de 10 à 30 mg de KOH/g et a été obtenu par alcoxylation d'un mélange constitué par

   a1) à concurrence de 30 à 80 moles %, un alcool ou un alkylphénol monofonctionnel contenant de 8 à 30 atomes de carbone,

   a2) à concurrence de 2 à 10 moles %, de l'hydroxyde de sodium ou de potassium,

   a3) à concurrence de 10 à 60 moles %, de l'eau, et

   a4) à concurrence de 0 à 10 moles %, un alcool tri- à hexavalent du domaine de poids moléculaire de 92 à 600,

   en utilisant de l'oxyde d'éthylène ou un mélange d'oxyde d'éthylène avec de l'oxyde de propylène jusqu'à concurrence de 20 moles % rapportés à la quantité totale des oxydes d'alkylènes, avec traitement ultérieur connu en soi du produit d'alcoxylation, les indications en pour cent mentionnées sous a1) à a4) se complétant pour obtenir 100.

2. Procédé selon la revendication 1, caractérisé en ce que le composant a1) est constitué par des alcools aliphatiques monovalents contenant de 12 à 18 atomes de carbone ou par des mélanges techniques d'alcools de ce type.

3. Procédé selon les revendications 1 et 2, caractérisé en ce que le composant b) est constitué de l'hexaméthylènediisocyanate, du 4,4'-diisocyanatodicyclohexylméthane, du 1-isocyanato-3,3,5-isocyanatométhylcyclohexane ou d'un mélange de diisocyanates de ce type.

4. Polyuréthannes obtenus conformément aux revendications 1 à 3.

5. Utilisation des polyuréthannes obtenus conformément aux revendications 1 à 3 à titre d'épaississants pour des systèmes aqueux.